# EUROPEAN PATENT APPLICATION

(11) **EP 4 360 484 A1**
(43) Date of publication of application: **01.05.2024**
(21) Application number: 21946994.7
(22) Date of filing: 21.06.2021
(51) Int. Cl.: A24F 40/50

(54) **POWER SOURCE UNIT FOR AEROSOL GENERATION DEVICE**

(71) Applicant: Japan Tobacco, Inc., Tokyo, 105-6927 (JP)
(72) Inventor: FUJINAGA, Ikuo, Tokyo 130-8603 (JP)
(74) Representative: Hoffmann Eitle
(86) International application number: PCT/JP2021/023450
(87) International publication number: WO 2022/269704

(57) **Abstract**

Provided is a power source unit that is for an aerosol generation device, and that supplies electric power to an atomizer having a heater for heating an aerosol source. This power source unit comprises: a power source; an electric power supply part for supplying electric power from the power source to a heater; a first notification part; a second notification part which is disposed as a body separate from the first notification part; and a controller which performs control on the supply of electric power by the electric power supply part and on the notifications made by the first notification part and the second notification part. The controller acquires a remaining quantity of an element that is consumed to generate an aerosol having a flavor, causes the first notification part to notify the remaining quantity of said element if the remaining level of the power source is equal to or higher than a first threshold, and causes the second notification part to notify the remaining quantity of the element if the remaining level of the power source is less than the first threshold.

## Description

### TECHNICAL FIELD

The present invention relates to a power supply unit of an aerosol generation apparatus.

### BACKGROUND ART

In an aerosol generation apparatus that generates aerosol that can be sucked, the number of puff operations (suction operations) that can be performed by one charge can be one important indicator. To improve such indicator, it is important to reduce the power consumption in a display unit and the like provided in the aerosol generation apparatus.

PTL 1 describes that electronic paper (e-ink) is adopted for the display unit of an electronic cigarette to reduce the power consumption. In addition, PTLs 2 and 3 describe that e-ink can be adopted for the display unit of a suction apparatus.

### CITATION LIST

### PATENT LITERATURE

PTL 1: Chinese Utility Model Registration No. 203505584
PTL 2: US-2017-0304567
PTL 3: U.S. Patent No. 8851068

### SUMMARY OF INVENTION

### TECHNICAL PROBLEM

In a case where an aerosol generation apparatus includes a plurality of kinds of display units, it is important to appropriately perform display control in accordance with the state of the apparatus so as to suppress the power consumption without impairing the comfort of a user. In the conventional techniques, display control is not sufficiently performed in terms of such viewpoint.

The present invention provides, for example, a power supply unit of an aerosol generation apparatus, that is advantageous in both obtaining the comfort of the user and suppressing the power consumption.

### SOLUTION TO PROBLEM

According to one aspect of the present invention, there is provided a power supply unit of an aerosol generation apparatus, that supplies electric power to an atomizer including a heater configured to heat an aerosol source, characterized by comprising a power supply, a power supplier configured to supply electric power from the power supply to the heater, a first notification unit, a second notification unit separated from the first notification unit, and a controller configured to control the electric power supply by the power supplier and notifications by the first notification unit and the second notification unit, wherein the controller acquires a remaining amount of an element consumed to generate flavored aerosol, makes a notification of the remaining amount of the element by the first notification unit in a case where a remaining amount of the power supply is not smaller than a first threshold, and makes a notification of the remaining amount of the element by the second notification unit in a case where the remaining amount of the power supply is smaller than the first threshold.

According to the embodiment, a power consumption of the first notification unit is larger than a power consumption of the second notification unit.

According to the embodiment, the controller executes the electric power supply by stopping the notification by the first notification unit, and executes the electric power supply while continuing the notification by the second notification unit.

According to the embodiment, the controller continues the notification by the second notification unit even after the electric power supply is stopped.

According to the embodiment, the controller is operable in a sleep mode in which a power consumption of the controller is smaller than in an active mode in which the electric power supply is executable, and continues the notification by the second notification unit in the sleep mode.

According to the embodiment, the second notification unit can continue the notification in the sleep mode without consuming the electric power.

According to the embodiment, the controller continues the notification by the second notification unit until the remaining amount of the element is recovered.

According to the embodiment, a third notification unit separated from the first notification unit and the second notification unit is further provided, and the controller makes a notification of the remaining amount of the element by the third notification unit in a case where the remaining amount of the power supply is smaller than a second threshold smaller than the first threshold.

According to the embodiment, a power consumption of the first notification unit and a power consumption of the third notification unit are larger than a power consumption of the second notification unit.

According to the embodiment, the power consumption of the first notification unit is larger than the power consumption of the third notification unit.

According to the embodiment, in a case where the remaining amount of the power supply is smaller than the second threshold, the controller makes a notification of the remaining amount of the element by the second notification unit and the third notification unit.

According to another aspect of the present invention, there is provided a power supply unit of an aerosol generation apparatus, that supplies electric power to an atomizer including a heater configured to heat an aerosol source, characterized by comprising a power supply, a power supplier configured to supply electric power from the power supply to the heater, a display configured to consume the electric power only to rewrite contents to be displayed, and a controller configured to control the electric power supply by the power supplier and display on the display, wherein the controller acquires a remaining amount of an element consumed to generate flavored aerosol, and displays the remaining amount of the element on the display only in a case where a remaining amount of the power supply is smaller than a first threshold.

### ADVANTAGEOUS EFFECTS OF INVENTION

According to the present invention, it is possible to provide a power supply unit of an aerosol generation apparatus, that is advantageous in both obtaining the comfort of the user and suppressing the power consumption.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is an exploded perspective view of a suction apparatus;
Fig. 2 is an assembly completed diagram of the suction apparatus;
Fig. 3 is a view of the internal arrangement of the suction apparatus;
Fig. 4 is a circuit diagram showing an example of the arrangement of an electrical component;
Fig. 5 shows a state transition diagram of a power supply unit and views of display examples of a display;
Fig. 6 is a view showing display examples of the display;
Fig. 7 is a flowchart illustrating an example of the operation of the power supply unit;
Fig. 8 is a flowchart illustrating the example of the operation of the power supply unit;
Fig. 9 is a flowchart illustrating the example of the operation of the power supply unit;
Fig. 10 is a flowchart illustrating the example of the operation of the power supply unit;
Fig. 11 is a flowchart illustrating the example of the operation of the power supply unit; and
Fig. 12 is a flowchart illustrating the example of the operation of the power supply unit.

### DESCRIPTION OF EMBODIMENTS

Hereinafter, embodiments will be described in detail with reference to the attached drawings. Note, the following embodiments are not intended to limit the scope of the claimed invention, and limitation is not made an invention that requires a combination of all features described in the embodiments. Two or more of the multiple features described in the embodiments may be combined as appropriate. Furthermore, the same reference numerals are given to the same or similar configurations, and redundant description thereof is omitted.

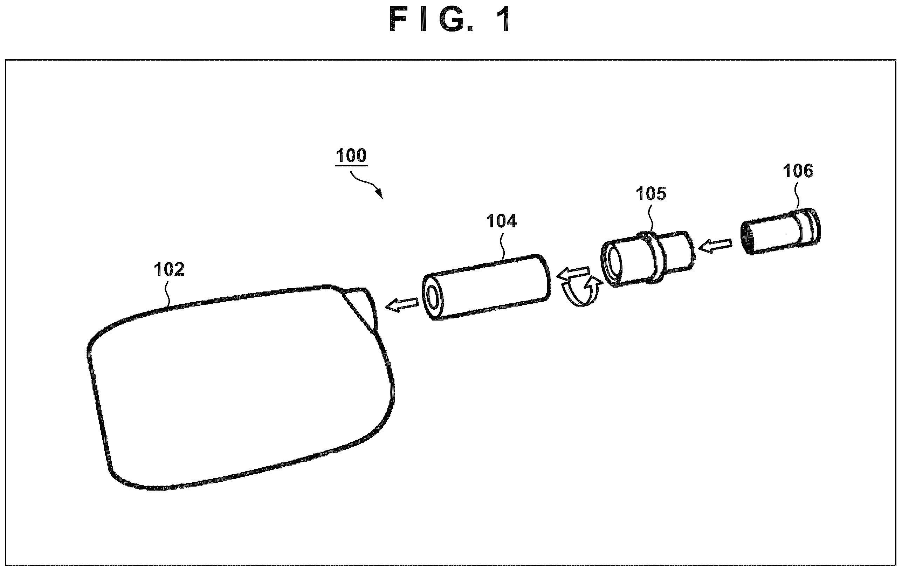

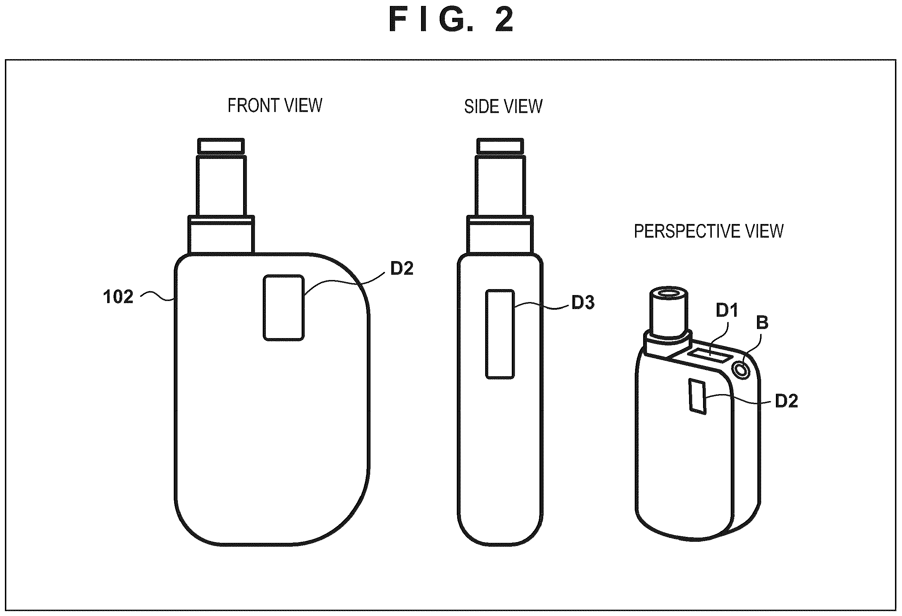

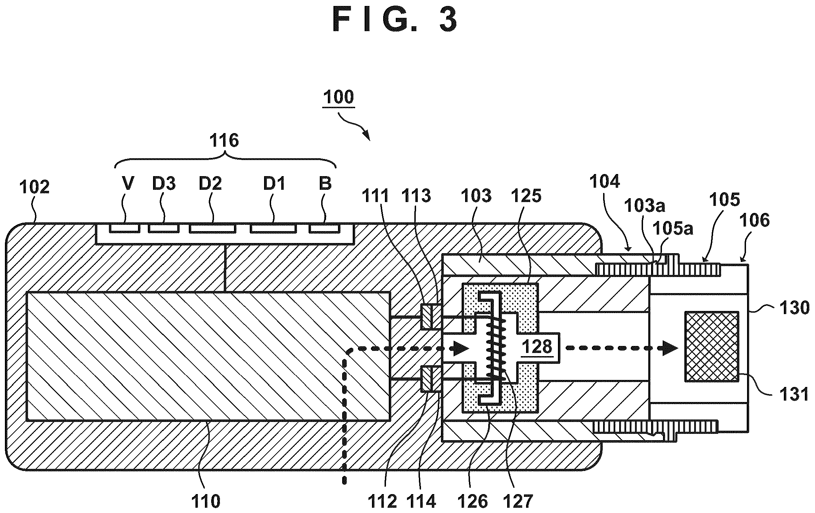

The arrangement of a suction apparatus 100 as one form of an aerosol generation apparatus will be described with reference to Figs. 1 to 3. Fig. 1 shows an exploded perspective view of the suction apparatus 100, Fig. 2 shows an assembly completed diagram of the suction apparatus 100, and Fig. 3 shows a view of the internal arrangement of the suction apparatus 100. The suction apparatus 100 can be configured to provide, to a user via a mouthpiece portion 130, aerosol, flavored aerosol, a gas containing aerosol and a flavor material, aerosol, or aerosol containing a flavor material in accordance with an operation of requesting aerosol (to be also referred to as an "aerosol generation request" or "atomization request" hereinafter) such as a suction operation by the user. The suction apparatus 100 as a controller for the suction apparatus can include a power supply unit 102, an atomizer 104, a capsule holder 105, and a capsule 106.

The atomizer 104 can be configured to generate flavored aerosol from an aerosol source. The aerosol source can be, for example, a liquid such as a polyhydric alcohol such as glycerin or propylene glycerol. Alternatively, the aerosol source may contain a drug. The aerosol source may be a liquid, a solid, or a mixture of a liquid and a solid. A vapor source such as water may be used in place of the aerosol source. The atomizer 104 may be provided as a cartridge detachable from the power supply unit 102 as a main body portion. The atomizer 104 may be provided not to be detachable from the power supply unit 102. In this specification, the atomizer 104 will sometimes be referred to as the cartridge 104 hereinafter. The power supply unit 102 may be understood as a driving unit that drives the atomizer 104, a holding body that holds the atomizer 104, a main body that causes the atomizer 104 to function, or the like.

The power supply unit 102 can include a holding portion 103 that holds the atomizer 104. The holding portion 103 can be configured to accommodate the overall atomizer 104 or a part of it. The holding portion 103 may further be configured to hold the capsule holder 105. Alternatively, the capsule holder 105 may be held by the atomizer 104. The capsule holder 105 holds the capsule 106. In an example, the holding portion 103 may include a lock mechanism for preventing the capsule holder 105 from dropping from the holding portion 103. The lock mechanism can include a second engagement portion 103a configured to engage with a first engagement portion 105a that can be provided in the capsule holder 105. For example, when the capsule holder 105 is inserted into the holding portion 103 while being rotated, the first engagement portion 105a and the second engagement portion 103a engage with each other to be set in a locked state. In the locked state, connecting portions 113 and 114 of the atomizer 104 are pressed against connecting portions 111 and 112 of the power supply unit 102, respectively, and electrical connections between the connecting portions 113 and 114 and the connecting portions 111 and 112 can thus be provided. The capsule holder 106 may be integrated with the atomizer 104 or the power supply unit 102. Furthermore, if the capsule 106 is inserted to the distal end side of the capsule holder 105, a gas can circulate between the atomizer 104 and the capsule 106. The capsule 106 can include a flavor source 131. The flavor source 131 can be, for example, a molded body formed by molding a tobacco material. Alternatively, the flavor source 131 may be formed by a plant (for example, mint, herb, Chinese herb, coffee bean, and the like) other than tobacco. A flavor such as menthol may be added to the flavor source. The flavor source 131 may be added to the aerosol source. The user can hold, in their mouth, the mouthpiece portion 130 formed at the distal end of the capsule 106 and inhale flavored aerosol.

The power supply unit 102 can include an electrical component 110. The electrical component 110 can include a user interface 116. Alternatively, the power supply unit 102 may be understood to include the electrical component 110 and the user interface 116. The user interface 116 can include an action button B as an operation unit operable by the user. The action button B can be a button used as a trigger for an operation such as activation of the power supply unit 102 or display. The user interface 116 can further include a first notification unit and a second notification unit separated from the first notification unit. In this embodiment, the first notification unit can be an organic light emitting diode (OLED) display D1, and the second notification unit can be an electronic paper (e-ink) display D2. The OLED display D1 and the electronic paper display D2 may be different in power consumption due to different display principles. The OLED display D1 does not require a backlight device unlike a liquid crystal display, since the organic light emitting diode emits light. The electronic paper display D2 is a kind of nonvolatile display. According to the electronic paper technique, it is unnecessary to continuously supply electric power to continuously hold an image on the display. In other words, the electronic paper display does not require electric power to maintain the current display state. The electronic paper display can be said as a display that consumes electric power only to rewrite contents to be displayed. Therefore, the power consumption of the electronic paper display is smaller than that of the OLED display. However, the electronic paper display has no self-light emitting function unlike the OLED display, and thus has low visibility in a dark environment, as compared with the OLED display.

The user interface 116 can further include a third notification unit in addition to the OLED display D1 and the electronic paper display D2. The third notification unit can include a light emitting display (LED) display D3 and/or a vibration generation unit V. In an example, the LED display D3 can be formed by a plurality of LEDs (for example, 10 or less, 20 or less, or 30 or less LEDs). In this case, the LED display can display a small amount of information, as compared with the electronic paper display, but has high visibility since high luminance can be implemented. Furthermore, the vibration generation unit V can be formed by a vibration motor for vibrating the housing of the power supply unit 102. By vibrating the housing by the vibration motor, it is possible to notify the user, who holds the housing, of the state. In an example, the power consumption of the OLED display D1 and the power consumption of the LED display D3 are larger than that of the electronic paper display D2, and the power consumption of the OLED display D1 is larger than those of the LED display D3 and the vibration generation unit V.

Fig. 2 shows an example of the arrangement of the action button B, the OLED display D1, the electronic paper display D2, and the LED display D3. In the example shown in Fig. 2, the OLED display D1 is arranged on the upper surface of the power supply unit 102, and the electronic paper display D2 and the LED display D3 are arranged on different side surfaces of the power supply unit 102. However, the arrangement positions of the displays D1, D2, and D3 may be changed, or the displays D1, D2, and D3 may be arranged at other positions. The LED display D3 may be arranged around a window portion so that the window portion for viewing the remaining amount of the aerosol source in the atomizer 104 becomes bright, as shown in, for example, the side view of Fig. 2. Alternatively, the LED display D3 may be arranged around the action button B so that a portion around the action button B becomes bright. Furthermore, the arrangement position of the action button B is not limited to that shown in the example of Fig. 2, and the action button B may be arranged at another position.

The power supply unit 102 can include the first connecting portion 111 and the second connecting portion 112. In a state in which the atomizer 104 is held by the holding portion 103 and the capsule holder 105 is attached to the holding portion, the first connecting portion 111 can electrically be connected to the third connecting portion 113 of the atomizer 104, and the second connecting portion 112 can electrically be connected to the fourth connecting portion 114 of the atomizer 104. The first connecting portion 111, the second connecting portion 112, the third connecting portion 113, and the fourth connecting portion 114 can be electrical contacts or connectors. The power supply unit 102 can supply electric power to the atomizer 104 via the first connecting portion 111 and the second connecting portion 112.

The atomizer 104 can include the third connecting portion 113 and the fourth connecting portion 114. Furthermore, the atomizer 104 can include a heater 127 for generating flavored aerosol from the aerosol source, a container 125 that holds the aerosol source, and a transport portion 126 that transports the aerosol source held by the container 125 to a heating area by the heater 127 and holds the aerosol source in the heating area. At least a part of the heating area can be arranged in a channel 128 provided in the atomizer 104. The first connecting portion 111, the third connecting portion 113, the heater 127, the fourth connecting portion 114, and the second connecting portion 112 form a current path configured to flow a current to the heater 127. The transport portion 126 can be made of, for example, a fiber material such as glass fiber, a porous material such as ceramic, or a combination thereof. Note that the transport portion 126 can also be called a wick. Note that the means for transporting the aerosol source in the container 125 to the heating area is not limited to the wick, and may be implemented by a spraying device such as a spray or a transporting means such as a pump.

If the user holds the mouthpiece portion 130 in the mouth and performs a suction operation, air flows into the channel 128 of the atomizer 104 through an opening (not shown), as exemplified by a broken arrow. When the heater 127 heats the aerosol source, the vaporized and/or aerosolized aerosol source is transported toward the mouthpiece portion 130 by air. In the process in which the aerosol source is transported toward the mouthpiece portion 130, the vaporized aerosol source is cooled to form fine liquid droplets, thereby promoting aerosolization. In the arrangement in which the flavor source 131 is arranged, a flavor material generated from the flavor source 131 is added to the aerosol, and the resultant flavored aerosol is transported to the mouthpiece portion 130, and sucked into the user's mouth. Since the flavor material generated from the flavor source 131 is added to the aerosol, the flavor material can efficiently be transported to the lungs of the user without staying in the oral cavity of the user.

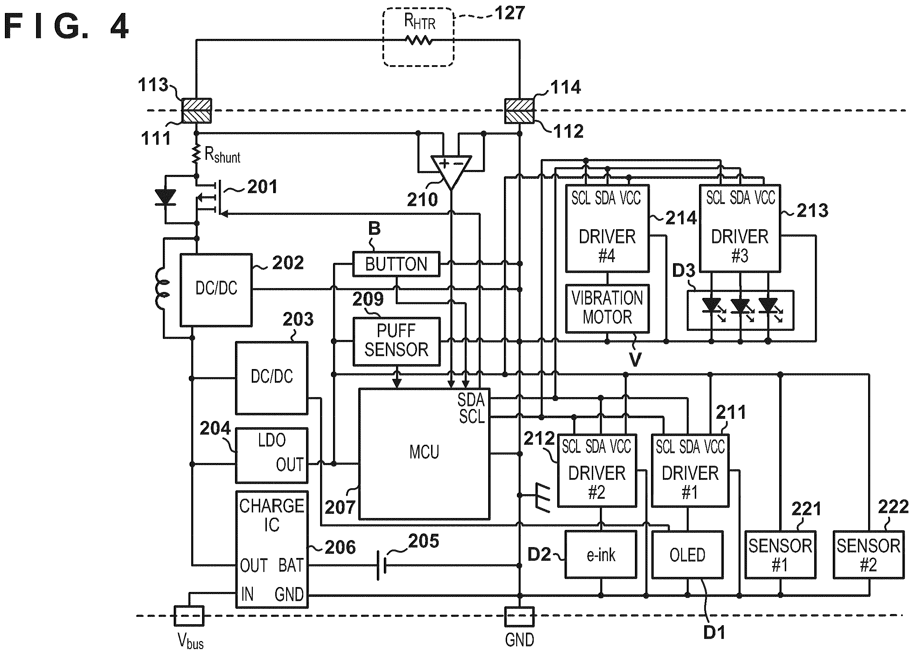

Fig. 4 shows an example of the arrangement of the electrical component 110. The electrical component 110 includes a power supply 205 and a charging circuit (charging IC) 206. The electrical component 110 can function as a power supplier that supplies electric power from the power supply 205 to the heater 127.

The power supply 205 is a chargeable battery (secondary battery) such as a lithium-ion battery. Alternatively, the power supply 205 may be formed by an electric double-layer capacitor such as a lithium-ion capacitor. The power supply 205 can be charged using electric power supplied from a V_{bus} port. A power supply device (external power supply) (not shown) can be connected to the V_{bus} port via a cable. The V_{bus} port, the cable, and the power supply device can be formed in compliance with, for example, standards such as the Universal Serial Bus (USB) Type-A, Type-B, and Type-C. The power supply device can supply electric power to the power supply 205 via the cable and the V_{bus} port. The power supply device can be a personal computer (PC) or a charger such as a portable battery. When the power supply unit 102 is connected to the charger via the V_{bus} port and the cable, the power supply unit 102 and the charger communicate with each other, and then the charger can charge the power supply 205. Note that for connection between the power supply unit 102 and the power supply device, not only the USB but also other various communication methods that can implement data communication and electric power supply can be applied.

The electrical component 110 can include one or a plurality of voltage converters. In a case where the electrical component 110 includes a plurality of voltage converters, at least two of the voltage converters can generate different voltages or equal voltages. In the example of the arrangement shown in Fig. 4, the electrical component 110 includes voltage converters 202, 203, and 204. The electrical component 110 need not include any voltage converter. In this case, a voltage output from the power supply 205 can be provided to a plurality of elements forming the electrical component 110 with a small voltage drop caused by the wire resistance. In the example of the arrangement shown in Fig. 4, the voltage converters 202 and 203 are each formed by a switching regulator such as a DC/DC converter but at least one of the voltage converters may be formed by a Low DropOut (LDO). In the example of the arrangement shown in Fig. 4, the voltage converter 204 is formed by a Low DropOut (LDO) but may be formed by a switching regulator such as a DC/DC converter.

The electrical component 110 can include an MCU (processor) 207 as a control unit (controller) that operates in accordance with software (program) installed in advance. The MCU 207 may be replaced by another device such as an ASIC. The MCU 207 can be configured to control electric power supply to the heater 127 by operating a switch 201 and the like. In addition, the MCU 207 can be configured to control a notification by each notification unit by controlling drivers 211, 212, 213, and 214 as integrated circuits (ICs) forming the electrical component 110. The drivers 211, 212, 213, and 214 drive the displays D1, D2, and D3 and the vibration motor V, respectively. Therefore, the MCU 207 may be understood to drive or control the displays D1, D2, and D3 and the vibration motor V The drivers 211, 212, 213, and 214 can be supplied with the voltage (electric power) from the voltage converter 204. The OLED display D1 can be supplied with the voltage (electric power) from the voltage converter 203. The action button B can be supplied with the voltage (electric power) from the voltage converter 204.

The power supply unit 102 may include a puff sensor 209 that detects a suction operation by the user, that is, puff, and the voltage converter 204 can supply the voltage (electric power) to the puff sensor 209. The puff sensor 209 can detect puff by detecting, for example, at least one of the pressure, the sound, and the temperature (for example, the temperature of air flowing into the channel 128 of the atomizer 104 via the above-described opening, or the temperature of the heater 127).

The electrical component 110 can include the switch 201 for controlling energization (supply of electric power) to the heater 127 as the load of the atomizer 104. The voltage converter 202 can supply a voltage (electric power) to the heater 127 via the switch 201. A shunt resistor Rₛₕᵤₙₜ may be arranged in a closed circuit formed by including the switch 201 and the heater 127. The electrical component 110 can include a measurement circuit 210 for measuring the temperature of the heater 127. The heater 127 can have a positive or negative temperature coefficient characteristic in which a resistance value R_{HTR} changes in accordance with the temperature of the heater 127, and the resistance value R_{HTR} of the heater 127 can have a strong correlation with the temperature of the heater 127. The measurement circuit 210 is a circuit for measuring the resistance value R_{HTR} of the heater 127, and can be configured to, for example, measure the voltages at the two terminals of the heater 127. The output from the measurement circuit 210 is provided to the MCU 207, and the MCU 207 can calculate the resistance value R_{HTR} based on the output from the measurement circuit 210 and a current value flowing through the heater 127. The current value can be obtained using, for example, a measurement circuit (not shown) that measures the voltages at the two terminals of the shunt resistor Rₛₕᵤₙₜ. The MCU 207 can control the switch 201 so as to perform feedback control (for example, PID control) of the temperature of the heater 127 based on the temperature of the heater 127 measured using the measurement circuit 210.

The electrical component 110 can include a first sensor 221 that detects the presence or absence of the atomizer 104 and a second sensor 222 that detects the presence or absence of the capsule 106. The first sensor 221 and the second sensor 222 can be supplied with the voltage (electric power) from the voltage converter 204. Each of the first sensor 221 and the second sensor 222 can be, for example, a photo interrupter, a proximity sensor, an RFID system, or a switch. The switch that detects the presence or absence of the atomizer 104 can be turned on (or off) when the atomizer 104 is inserted into the holding portion 103, and turned off (or on) when the atomizer 104 is detached from the holding portion 103. The switch that detects the presence or absence of the capsule 106 can be turned on (or off) when the capsule 106 is inserted into the holding portion 103, and turned off (or on) when the capsule 106 is detached from the holding portion 103.

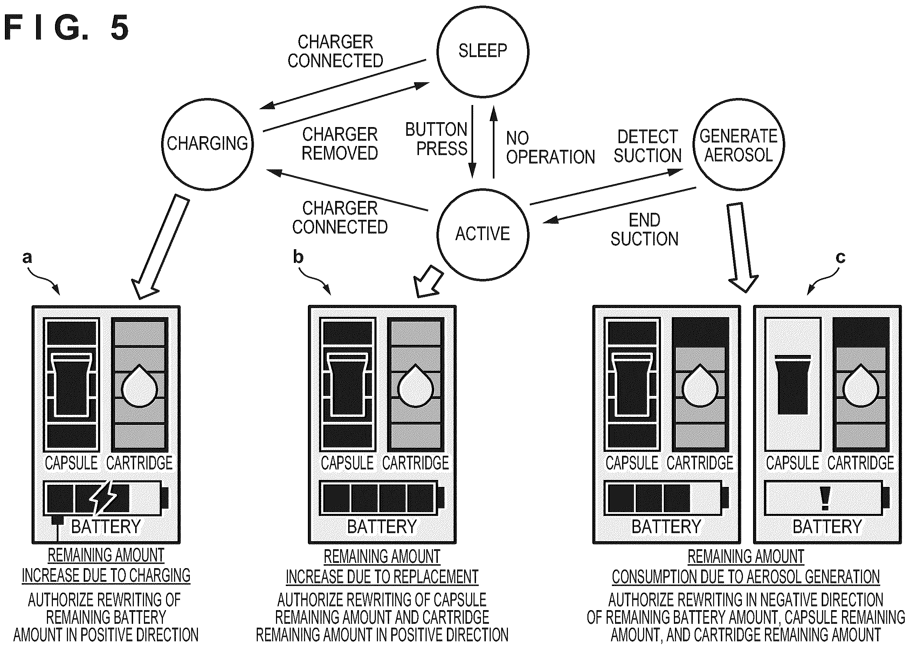

The state transition of the power supply unit 102 and a display example of the display in each state according to the embodiment will be described with reference to a state transition diagram shown in Fig. 5. The MCU (processor) 207 as a controller can operate in four modes of a sleep mode, an active mode, an aerosol generation mode, and a charging mode.

The sleep mode is a state in which the suction apparatus 100 stops the main operation, and is a mode in which the power consumption of the controller is smaller than in at least the active mode (to be described later). In the sleep mode, no electric power is supplied to the heater 127 of the atomizer 104. In the sleep mode, the electric power consumed by the suction apparatus 100 can be minimized. The sleep mode can also be called a power-saving mode or a standby mode. In the sleep mode, the power supply unit 102 is locked, and thus the user cannot suck aerosol.

In the sleep mode, if a predetermined operation is performed on the action button B, the lock is released, and the power supply unit 102 transitions to the active mode. The predetermined operation can be, for example, an operation of repeatedly pressing the action button B a predetermined number of times (for example, three times), an operation of long-pressing the action button B for a predetermined time (for example, 3 sec), or the like. If, in the active mode, a predetermined time elapses without the predetermined operation, the suction apparatus 100 can return to the sleep mode.

If the puff sensor 209 detects suction (puff) by the user in the active mode, the suction apparatus 100 transitions to the aerosol generation mode of generating aerosol. When the suction ends or a suction time reaches a predetermined upper limit time, the suction apparatus 100 can return to the active mode.

When the external power supply (charger) is connected to the V_{bus} port in the sleep mode or the active mode, the suction apparatus 100 transitions to the charging mode and the power supply 205 is charged. When the external power supply is detached from the V_{bus} port or the power supply is set in a full charge state, the suction apparatus 100 transitions to the sleep mode. The full charge state means that the SOC (State Of Charge) or the charging rate is 100% or is equal to or higher than a predetermined value (for example, 98%, 95%, or 90%) close to 100%.

A display example b of Fig. 5 shows a display example of the OLED display D1 and/or the electronic paper display D2 in the active mode. Note that "the display of the OLED display D1 and/or the electronic paper display D2" can include a case where only one of the OLED display D1 and the electronic paper display D2 displays information and a case where both the OLED display D1 and the electronic paper display D2 display information. Practical control thereof will be described later. In the display example b of Fig. 5, on the OLED display D1 and/or the electronic paper display D2, each of the remaining amount (to be referred to as the "capsule remaining amount" hereinafter) of the flavor source 131 in the capsule 106, the remaining amount (to be referred to as the "cartridge remaining amount" hereinafter) of the aerosol source in the atomizer 104 (to be referred to as the "cartridge" hereinafter), and the remaining amount (to be referred to as the "remaining battery amount" hereinafter) of the power supply 205 is displayed in a bar graph form. A display example a of Fig. 5 shows a display example of the OLED display D1 and/or the electronic paper display D2 in the charging mode. In the charging mode, the capsule remaining amount, the cartridge remaining amount, and the remaining battery amount can be displayed. In a display portion of the remaining battery amount, a mark representing a charging state can additionally be displayed. A display example c of Fig. 5 shows a display example of the OLED display D1 and/or the electronic paper display D2 in the aerosol generation mode. Since the capsule remaining amount, the cartridge remaining amount, and the remaining battery amount respectively decrease by generating aerosol, the number of bars in at least one graph decreases, as shown in a left portion in the display example c of Fig. 5. A right portion in the display example c of Fig. 5 shows that the capsule remaining amount is small and there is no remaining battery amount (exhaustion).

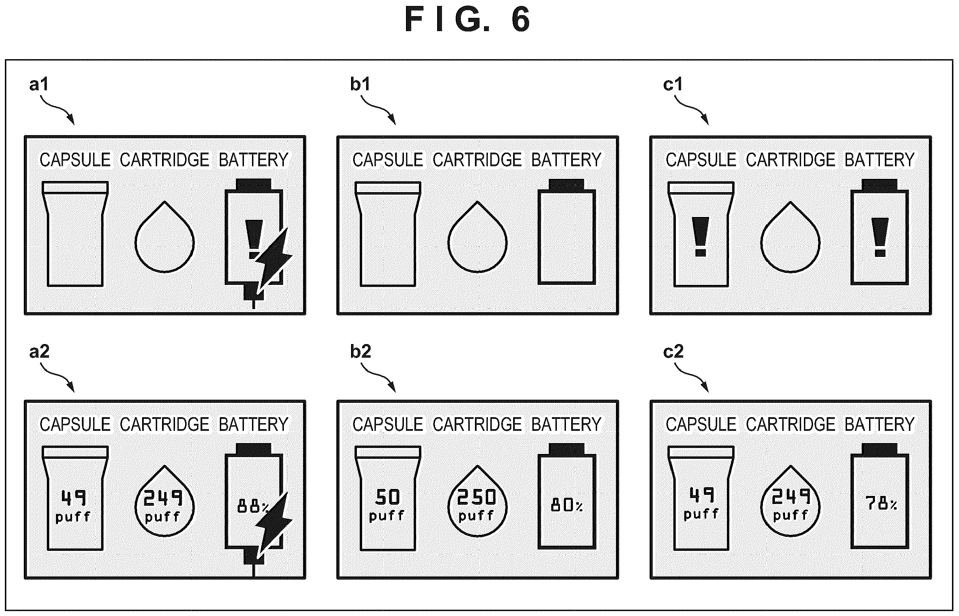

The display examples a to c of Fig. 5 are merely examples, and the display forms of the capsule remaining amount, the cartridge remaining amount, and the remaining battery amount may be other forms. For example, as shown in display examples a1, b1, and c1 of Fig. 6, icons representing only the presence/absence of the remaining amounts, respectively, may be displayed. As shown in the display examples b1, b2, and b3 of Fig. 6, each remaining amount may be indicated by a numerical value. In this embodiment, since the electronic paper display is adopted as the second notification unit, it is possible to continue the notification by the second notification unit (the display of the electronic paper display D2) without consuming the electric power in the sleep mode. In this way, since the remaining amount notification is made even in the sleep mode, the user readily notices the necessity of recovery of the remaining amount with respect to the element for which the user is notified of the remaining amount. Furthermore, it is possible to notify the user of the remaining amount of each element in the sleep mode without consuming the electric power accumulated in the power supply. Therefore, it is possible to increase the operable time of the power supply unit 102.

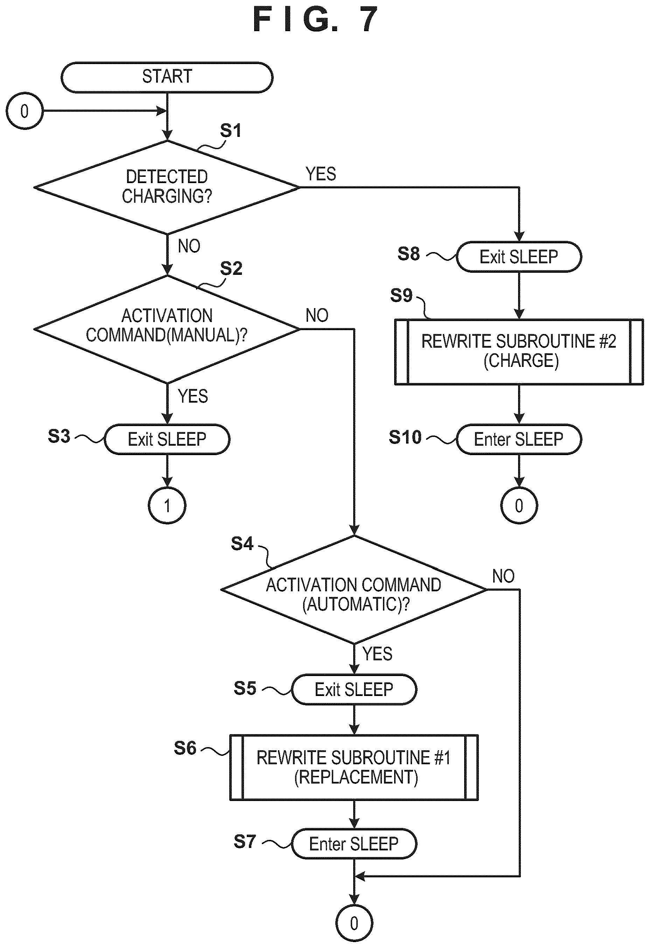

An example of the operation of the power supply unit 102 will be described with reference to Figs. 7 to 12. This operation is controlled by the MCU (processor) 207 as a controller. The MCU 207 can include a memory that stores programs and a CPU that operates in accordance with the programs. For example, a program corresponding to each flowchart is stored in the memory, and the CPU executes the program.

In the initial state, the power supply unit 102 stands by in the sleep mode. In step S1, the MCU 207 determines whether the external power supply (charger) is connected to the V_{bus} port to start charging of the power supply 205. If charging is not detected, the MCU 207 determines, in step S2, whether an activation command generated by performing a manual operation of, for example, repeatedly pressing the action button B a predetermined number of times is received. If it is determined that the activation command is received, the MCU 207 leaves the sleep mode to transition to the active mode in step S3. If it is determined in step S2 that the activation command generated by the manual operation is not received, the MCU 207 determines, in step S4, whether an activation command is generated. An activation command can be generated, for example, at a scheduled timing by a timer or the like. If no activation command is generated, the process returns to step S1. If an activation command is generated, the MCU 207 leaves the sleep mode to transition to the active mode in step S5. Next, in step S6, the MCU 207 executes rewrite subroutine #1 as processing concerning electronic paper display rewrite at the time of replacement of the cartridge or the capsule. By executing the rewrite subroutine #1, the display of the electronic paper display D2 is controlled. Details of the rewrite subroutine #1 will be described later. After that, the MCU 207 transitions to the sleep mode in step S7, and the process returns to step S1.

If charging is detected in step S1, the MCU 207 leaves the sleep mode to transition to the active mode in step S8, and executes a rewrite subroutine #2 as processing concerning electronic paper display rewrite at the time of charging. By executing the rewrite subroutine #2, the display of the electronic paper display D2 is controlled. Details of the rewrite subroutine #2 will be described later. After that, the MCU 207 transitions to the sleep mode in step S10, and the process returns to step S1.

As described above, in the sleep mode, the MCU 207 executes the processing (rewrite subroutine #1) concerning electronic paper display rewrite at the time of replacement of the cartridge or the capsule in accordance with the detection of the start of charging and the generation of the activation command, and executes the processing (rewrite subroutine #2) concerning electronic paper display rewrite at the time of charging in response to the start of charging.

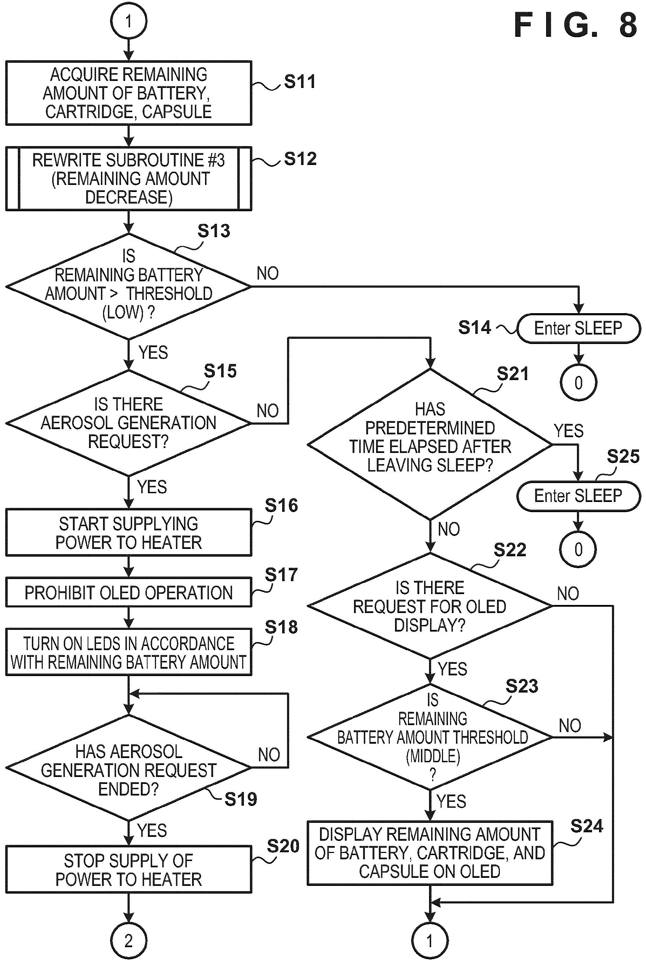

Fig. 8 shows a control procedure after canceling the sleep mode and transitioning to the active mode in step S3. Note that although not shown, after entering the active mode, the rewrite subroutine #1 is repeatedly executed at a scheduled timing (for example, periodically) simultaneously with the following processing, and the rewrite subroutine #2 is also executed as interrupt processing in response to the detection of the start of charging by monitoring the start of charging.

From step S11, the remaining amount of each of the plurality of elements that is displayed using the display D1, D2, or D3 decreases except for a case where cartridge replacement, capsule replacement, or charging is performed. To cope with this, in step S11, the MCU 207 acquires the remaining amounts of the plurality of elements, that is, the remaining battery amount, the cartridge remaining amount, and the capsule remaining amount. After that, in step S12, the MCU 207 executes a rewrite subroutine #3 as processing concerning electronic paper display rewrite along with a decrease in the remaining amount of each element. By executing the rewrite subroutine #3, the display of the electronic paper display D2 is controlled. Details of the rewrite subroutine #3 will be described later. The remaining amounts of the plurality of elements displayed on the display are the remaining amounts of the elements consumed to generate flavored aerosol, and are the remaining battery amount, the cartridge remaining amount, and the capsule remaining amount in this embodiment. For example, the MCU 207 can acquire the remaining battery amount based on the output voltage of the power supply 205. The MCU 207 can also acquire the remaining battery amount based on the number of puffs after the completion of charging. Alternatively, if the power supply unit 102 includes a management circuit that manages the power supply 205, the MCU 207 can acquire the remaining battery amount based on an output from the management circuit. The MCU 207 can acquire the cartridge remaining amount based on, for example, the number puffs after the atomizer 104 is attached to the holding portion 103 of the power supply unit 102. Alternatively, if the power supply unit 102 includes a sensor that detects the cartridge remaining amount, the MCU 207 can acquire the cartridge remaining amount based on an output from the sensor. The MCU 207 can acquire the capsule remaining amount based on, for example, the number puffs after the capsule 106 is attached to the holding portion 103 of the power supply unit 102. Alternatively, if the power supply unit 102 includes a sensor that detects the remaining amount, the MCU 207 can acquire the capsule remaining amount based on an output from the sensor.

In step S13, the MCU 207 determines whether the remaining amount (remaining battery amount) of the power supply 205 is larger than a "threshold (low)". The "threshold (low)" is a threshold for determining whether the remaining battery amount permits the operation in the active mode. More specifically, the "threshold (low)" can be set as, for example, the predetermined lower limit value of the remaining battery amount with which even generation of aerosol corresponding to N (for example, N = 1) puff operations is impossible. If the remaining battery amount is equal to or smaller than the "threshold (low)", the MCU 207 determines that it cannot operate in the active mode, and transitions to the sleep mode in step S14, and the process returns to step S1.

If the remaining battery amount is larger than the "threshold (low)", the MCU 207 waits, in step S15, for generation of an aerosol generation request (atomization request). The aerosol generation request can be, for example, transmission or a notification of detection of puff from the puff sensor 209 to the MCU 207. Alternatively, if an operation unit such as a switch (not shown) for an aerosol generation request is provided, an aerosol generation request can be generated by operating the operation unit by the user. An aerosol generation request may be generated by operating the action button B by the user.

If the generation of the aerosol generation request is detected in step S15, the MCU 207 starts electric power supply to the heater 127 in step S16, and prohibits the operation of the OLED display D1 in step S17. That is, the electric power supply to the heater 127 for aerosol generation in step S17 is performed by stopping the notification by the first notification unit (the display of the OLED display D1) (step S16), and is performed while continuing the notification by the second notification unit (the display of the electronic paper display D2 in step S12). Therefore, the display of the electronic paper display D2 is continued even during a puff operation. Thus, before the remaining battery amount is exhausted, the user readily notices the necessity of recovery of the remaining amount with respect to the element for which the user is notified of the remaining amount.

In step S18, the MCU 207 turns on LEDs the number of which corresponds to the remaining battery amount, among the plurality of LEDs of the LED display D3. In step S19, the MCU 207 waits for the end of the aerosol generation request. If the aerosol generation request ends, the MCU 207 stops the electric power supply to the heater 127 in step S20. Note that if a predetermined time has elapsed after the start of the electric power supply to the heater 127 in step S16, the MCU 207 may stop the electric power supply to the heater 127 in step S20 without waiting for the end of the aerosol generation request.

If no aerosol generation request is generated in step S15, the MCU 207 determines, in step S21, whether a predetermined time has elapsed after leaving the sleep mode (sleep cancellation). If the predetermined time has elapsed after sleep cancellation, the MCU 207 transitions to the sleep mode in step S25, and the process returns to step S1. If the predetermined time has not elapsed after sleep cancellation, the MCU 207 determines, in step S22, whether an OLED display request is generated. The OLED display request is used to request display of the OLED display D1. The OLED display request can be, for example, an operation of pressing the action button B a predetermined number of times (for example, once). If an OLED display request is generated in step S22, the MCU 207 determines, in step S23, whether the remaining battery amount is equal to or larger than a "threshold (middle)" (first threshold). The "threshold (middle)" is a threshold for determining a state in which the remaining battery amount has a margin with respect to the operation in the active mode. More specifically, the "threshold (middle)" can be set as, for example, a predetermined threshold of the remaining battery amount with which generation of aerosol corresponding to N (for example, N = 1) puff operations is possible but generation of aerosol corresponding to N+1 puff operations is impossible. If the remaining battery amount is equal to or larger than the "threshold (middle)", OLED display with high visibility is permitted. More specifically, if the remaining battery amount is equal to or larger than the "threshold (middle)", the MCU 207 notifies, by the first notification unit, the user of the remaining amounts of the respective elements (remaining battery amount, cartridge remaining amount, and capsule remaining amount) (displays the remaining amounts on the OLED display D1) in step S24.

If no OLED display request is generated in step S22, if it is determined in step S23 that the remaining battery amount is smaller than the threshold (middle), or after OLED display is performed in step S24, the process returns to step S11. Note that after step S24 or if it is determined in step S22 that no OLED display request is generated, the process may return to step S15. Therefore, if it is determined in step S23 that the remaining battery amount is smaller than the threshold (middle), display of the electronic paper display D2 is performed in step S12 but display of the OLED display D1 is not performed in step S24. In this way, it is possible to notify the user of the remaining amounts of the respective elements using an appropriate notification unit corresponding to the remaining battery amount. In particular, according to this embodiment, if the remaining battery amount is equal to or smaller than the threshold (middle), display of the OLED display D1 is not performed, and thus a decrease in remaining battery amount can be made gentle in a state in which the remaining battery amount is small, thereby increasing the operable time of the power supply unit 102.

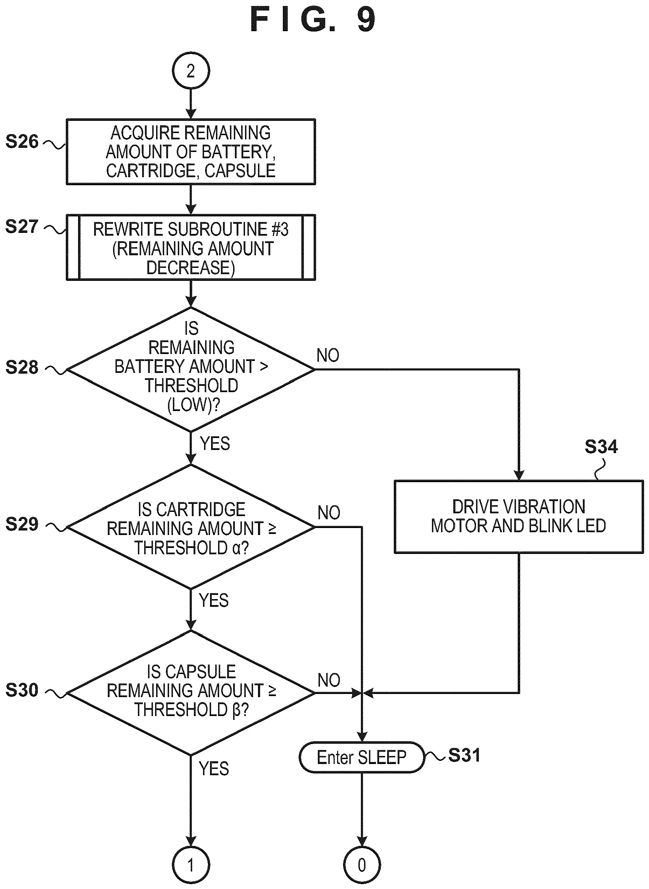

Fig. 9 shows a control procedure after the electric power supply to the heater 127 is stopped in step S20. In step S26, the MCU 207 acquires the remaining amounts of the plurality of elements, that is, the remaining battery amount, the cartridge remaining amount, and the capsule remaining amount. For example, the MCU 207 can acquire the remaining battery amount based on the output voltage of the power supply 205. The MCU 207 can also acquire the remaining battery amount based on the number puffs after the completion of charging. Alternatively, if the power supply unit 102 includes a management circuit that manages the power supply 205, the MCU 207 can acquire the remaining battery amount based on an output from the management circuit. The MCU 207 can acquire the cartridge remaining amount based on, for example, the number of puffs after the atomizer 104 is attached to the holding portion 103 of the power supply unit 102. Alternatively, if the power supply unit 102 includes a sensor that detects the cartridge remaining amount, the MCU 207 can acquire the cartridge remaining amount based on an output from the sensor. The MCU 207 can acquire the capsule remaining amount based on, for example, the number of puffs after the capsule 106 is attached to the holding portion 103 of the power supply unit 102. Alternatively, if the power supply unit 102 includes a sensor that detects the remaining amount, the MCU 207 can acquire the capsule remaining amount based on an output from the sensor.

After that, in step S27, the rewrite subroutine #3 as processing concerning display rewrite along with a decrease in the remaining amount of each element is executed. By executing the rewrite subroutine #3, the display of the electronic paper display D2 is controlled. Details of the rewrite subroutine #3 will be described later. As described above, according to this embodiment, even after the electric power supply to the heater 127 is stopped in step S20, the notification by the second notification unit (the display of the electronic paper display D2) is continued. Therefore, the user readily notices the necessity of recovery of the remaining amount with respect to the element for which the user is notified of the remaining amount. Note that even after the remaining battery amount is exhausted, the user can notice the necessity of recovery of the remaining amount with respect to the element for which the user is notified of the remaining amount by the electronic paper display D2.

In step S28, the MCU 207 determines whether the remaining battery amount is larger than a threshold (low). The threshold (low) concerning the remaining battery amount may be equal to the threshold (low) concerning the remaining battery amount used in step S13. If it is determined that the remaining battery amount is larger than the threshold (low), the process advances to step S29. In step S29, the MCU 207 determines whether the cartridge remaining amount is equal to or larger than a threshold α set for the cartridge remaining amount. If it is determined that the cartridge remaining amount is equal to or larger than the threshold α, the process advances to step S30. In step S30, the MCU 207 determines whether the capsule remaining amount is equal to or larger than a threshold β set for the capsule remaining amount. If it is determined that the capsule remaining amount is equal to or larger than the threshold β, that is, the remaining amount of each element is equal to or larger than the corresponding threshold, the process returns to step S11. Note that the process may return to step S15 instead of step S11. Since the process returns to step S11 or S15, the MCU 207 maintains the active mode, and can wait for an aerosol generation request in step S15, and then start electric power supply to the heater 127. Note that the execution order of steps S29 and S30 may be reversed, steps S29 and S30 may be executed at the same time, or at least one of steps S29 and S30 may be executed before step S28.

If it is determined in step S29 that the cartridge remaining amount is smaller than the threshold α, or it is determined in step S30 that the capsule remaining amount is smaller than the threshold β, the MCU 207 transitions to the sleep mode in step S31, and the process returns to step S1. As described above, if it is determined in step S28 that the remaining battery amount is larger than the threshold (low), the remaining amounts of the plurality of elements are displayed on the electronic paper display D2.

If it is determined in step S28 that the remaining battery amount is equal to or smaller than the threshold (low), the MCU 207 drives, in step S34, the vibration generation unit V and blinks the plurality of LEDs of the LED display D3. In this case, the exhaustion of the remaining battery amount is displayed on the electronic paper display D2 in step S27 (details of the processing will be described later), and the user is also notified of the exhaustion of the remaining battery amount by a vibration by the vibration generation unit V and blinking of the LEDs in step S34. Thus, the user is notified that it is necessary to charge the power supply 205.

As described above, in the state (NO in step S28) in which the remaining battery amount decreases to the threshold (low), a notification of the remaining amounts of the elements is made using the electronic paper display D2 as the second notification unit, the LED display D3 as the third notification unit, and/or the vibration generation unit V In this embodiment, the power consumption by the LED display D3 forming the third notification unit and/or driving of the vibration generation unit V is smaller than the power consumption of the OLED display D1 as the first notification unit. Therefore, it is possible to suppress a situation in which the power supply 205 is set in an overdischarge state as soon as a notification by the third notification unit is made and thus the notification by the third notification unit is made only for a short time. Thus, in the state (NO in step S28) in which the remaining battery amount decreases to the threshold (low), while the power consumption for the notification is suppressed, the user readily notices the necessity of recovery of the remaining amount.

After the completion of driving of the vibration generation unit V and blinking of the LEDs in step S34, the MCU 207 transitions to the sleep mode in step S31, and the process returns to step S1.

As described above, simultaneously with the above-described control procedures shown in Figs. 8 and 9, the rewrite subroutine #1 is repeatedly executed at a scheduled timing (for example, periodically), and the rewrite subroutine #2 is also executed as interrupt processing in response to the detection of the start of charging by monitoring the start of charging. By executing the rewrite subroutine #1 or the rewrite subroutine #2, display concerning the remaining amounts of the elements can be recovered. In this embodiment, since the second notification unit is formed by the electronic paper display, the MCU 207 can continue the notification by the second notification unit (the display of the electronic paper display D2) without consuming electric power until the remaining amounts of the elements are recovered. Since the display of the electronic paper display D2 is continued even if the power supply 205 is in the overdischarge state, the user readily notices the necessity of recovery of the remaining amount with respect to the element for which the user is notified of the remaining amount.

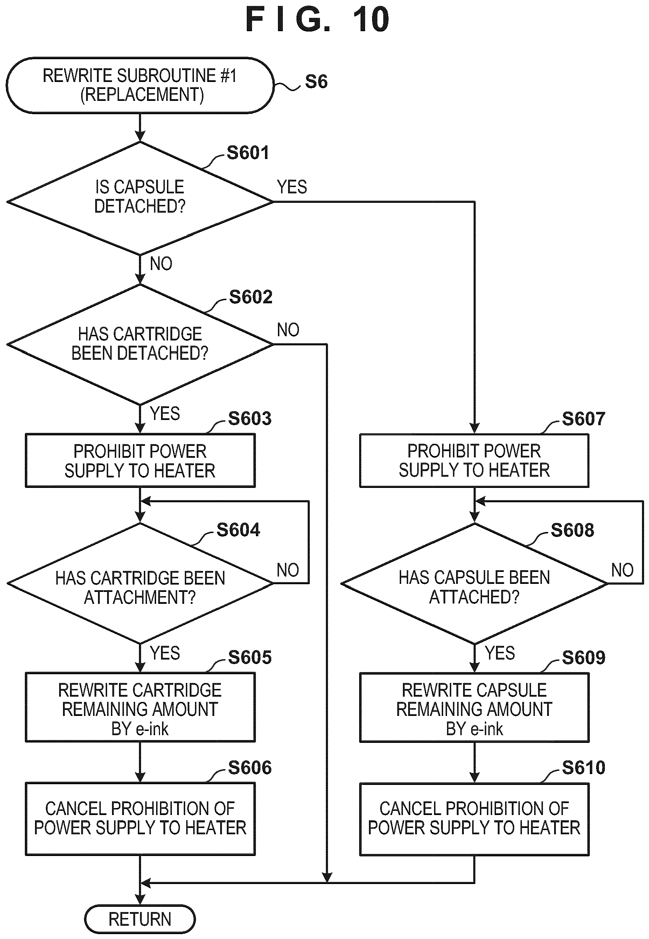

Fig. 10 shows a control procedure of the rewrite subroutine #1, that is performed in step S6 or repeatedly performed in the active mode at a predetermined timing. In step S601, the MCU 207 determines whether the capsule 106 is detected from the power supply unit 102. If it is determined that the capsule 106 is detached, the process advances to step S607; otherwise, the process advances to step S602. For example, if the second sensor 222 is provided, the MCU 207 can determine detachment of the capsule 106 from the power supply unit 102 based on an output from the second sensor 222.

In step S602, the MCU 207 determines whether the cartridge (atomizer 104) is detached from the power supply unit 102. If it is determined that the cartridge is detached, the process advances to step S603; otherwise, the process finishes the rewrite subroutine #1. If, for example, the first sensor 221 is provided, the MCU 207 can determine detachment of the cartridge from the power supply unit 102 based on an output from the first sensor 221. Alternatively, the MCU 207 can determine detachment of the cartridge from the power supply unit 102 based on a change in output from the measurement circuit 210. In this example, in a state in which the cartridge is correctly held by the holding portion 103 of the power supply unit 102, when the switch 201 is turned on, a voltage obtained by dividing the output voltage of the voltage converter 202 by the heater 127 and the shunt resistor Rₛₕᵤₙₜ is input to the measurement circuit 210. On the other hand, if the cartridge is detached from the holding portion 103 of the power supply unit 102, when the switch 201 is turned on, the output voltage of the voltage converter 202 is input to the measurement circuit 210. Therefore, if the cartridge is detached from the holding portion 103 of the power supply unit 102, when the switch 201 is turned on, an output from the measurement circuit 210 changes.

In step S603, the MCU 207 prohibits electric power supply to the heater 127. In a state in which the electric power supply to the heater 127 is prohibited, even if an aerosol generation request is generated, no electric power is supplied to the heater 127.

In step S604, the MCU 207 waits for attachment of the cartridge to the power supply unit 102. If, for example, the first sensor 221 is provided, the MCU 207 can determine attachment of the cartridge to the holding portion 103 of the power supply unit 102 based on an output from the first sensor 221. Alternatively, the MCU 207 can determine attachment of the cartridge to the holding portion 103 of the power supply unit 102 based on a change in output from the measurement circuit 210.

In step S605, the MCU 207 updates (rewrites) the display of the cartridge remaining amount on the electronic paper display D2. After that, in step S606, the MCU 207 cancels the prohibition of the electric power supply to the heater 127, and finishes the rewrite subroutine #1.

In step S607, the MCU 207 prohibits electric power supply to the heater 127 when the capsule 106 is detached. In a state in which electric power supply to the heater 127 is prohibited, even if an aerosol generation request is generated, no electric power is supplied to the heater 127.

In step S608, the MCU 207 waits for attachment of the capsule 106 to the power supply unit 102. If, for example, the second sensor 222 is provided, the MCU 207 can determine attachment of the capsule 106 to the holding portion 103 of the power supply unit 102 based on an output from the second sensor 222.

In step S609, the MCU 207 updates (rewrites) the display of the capsule remaining amount on the electronic paper display D2. After that, in step S610, the MCU 207 cancels the prohibition of the electric power supply to the heater 127, and finishes the rewrite subroutine #1.

Step S605 described above is a step performed when the cartridge is replaced, and step S609 is a step performed when the capsule is replaced. Since it is generally assumed that the cartridge or capsule remaining amount is recovered by replacing the cartridge or the capsule, control may be performed to permit only rewrite of the cartridge remaining amount in the increasing direction in step S605 and only rewrite of the capsule remaining amount in the increasing direction in step S609, as shown in the display example b of Fig. 5. However, if a sensor that detects the cartridge remaining amount is provided, the display of the cartridge remaining amount on the electronic paper display D2 may be rewritten based on an output from the sensor. Similarly, if a sensor that detects the capsule remaining amount is provided, the display of the capsule remaining amount on the electronic paper display D2 may be rewritten based on an output from the sensor.

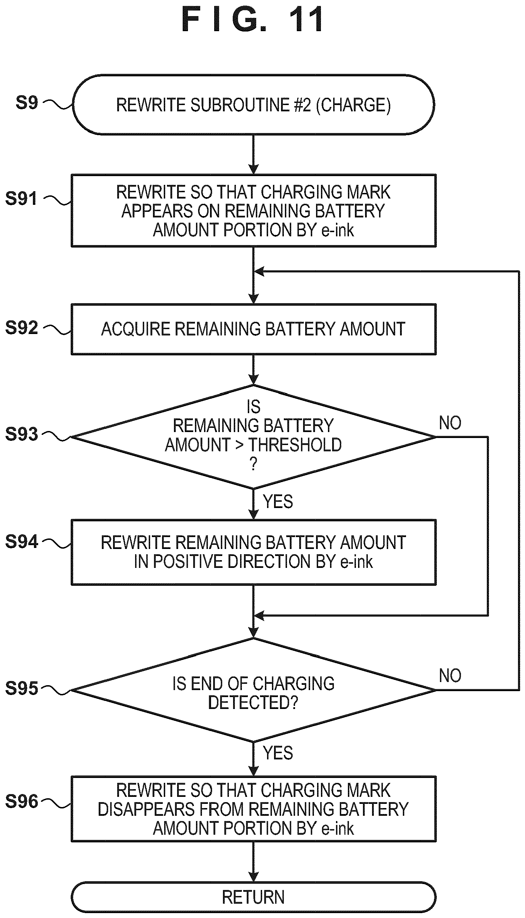

Fig. 11 shows a control procedure of the rewrite subroutine #2, that is performed in step S9 or repeatedly performed in the active mode at a predetermined timing. In step S91, the MCU 207 rewrites the remaining battery amount portion of the electronic paper display D2 so that a charging mark appears in the remaining battery amount portion (see the display example a of Fig. 5).

In step S92, the MCU 207 acquires the remaining battery amount based on, for example, the output voltage of the power supply 205 or communication with the charging IC 206. Next, in step S93, the MCU 207 determines whether the acquired remaining battery amount is larger than a predetermined threshold. If it is determined that the remaining battery amount is larger than the predetermined threshold, the process advances to step S94; otherwise, the process advances to step S95. In step S94, the MCU 207 rewrites the remaining battery amount in the increasing direction on the electronic paper display D2. In this example, as the predetermined threshold, a threshold for adjusting the rewrite frequency of the electronic paper display in step S94 can be used. After that, the process advances to step S95.

In step S95, the MCU 207 determines whether charging ends. If, for example, the external power supply (charger) is detached from the V_{bus} port or the power supply is set in a full charge state, the MCU 207 can determines that charging ends. If it is determined in step S95 that charging does not end, the process returns to step S92; otherwise, the process advances to step S96.

In step S96, the MCU 207 rewrites the remaining battery amount portion on the second display so as to clear the charging mark from the remaining battery amount portion, and finishes the rewrite subroutine #2.

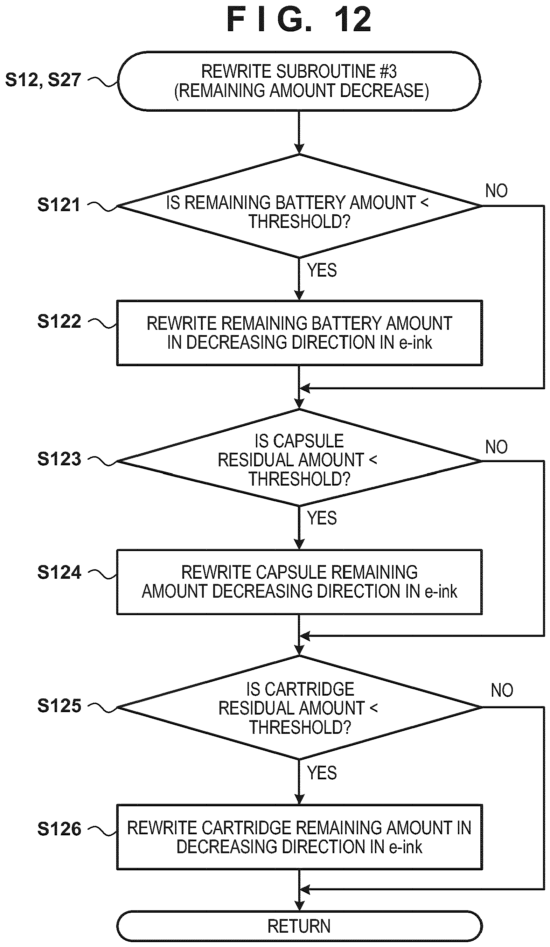

Fig. 12 shows a control procedure of the rewrite subroutine #3 performed in steps S12 and S27. By generating aerosol, the remaining amounts of the plurality of elements generally only decrease, and thus control may be performed to permit rewrite of the remaining amounts of the plurality of elements in the decreasing direction, as shown in the display example c of Fig. 5.

In step S121, the MCU 207 determines whether the remaining battery amount acquired in step S11 or S26 is smaller than a predetermined threshold. If it is determined that the remaining battery amount is smaller than the predetermined threshold, the process advances to step S122; otherwise, the process advances to step S123. In step S122, the MCU 207 rewrites the remaining battery amount in the decreasing direction on the electronic paper display D2. After that, the process advances to step S123.

In step S123, the MCU 207 determines whether the capsule remaining amount acquired in step S11 or S26 is smaller than a predetermined threshold. If it is determined that the capsule remaining amount is smaller than the predetermined threshold, the process advances to step S124; otherwise, the process advances to step S125. In step S124, the MCU 207 rewrites the capsule remaining amount in the decreasing direction on the electronic paper display D2. After that, the process advances to step S125.

In step S125, the MCU 207 determines whether the cartridge remaining amount acquired in step S11 or S26 is smaller than a predetermined threshold. If it is determined that the cartridge remaining amount is smaller than the predetermined threshold, the process advances to step S126; otherwise, the process finishes the rewrite subroutine #3. In step S126, the MCU 207 rewrites the cartridge remaining amount in the decreasing direction on the electronic paper display D2. After that, the process finishes the rewrite subroutine #3.

Note that as each of the predetermined threshold for the remaining battery amount in step S121, the predetermined threshold for the capsule remaining amount in step S123, and the predetermined threshold for the cartridge remaining amount in step S125, a threshold for adjusting the rewrite frequency of the electronic paper display can be used. Furthermore, in a case where the remaining battery amount is displayed in the bar graph form, as exemplified in Fig. 5, the threshold compared with the remaining battery amount in step S121 can include thresholds the number of which is equal to the number of bars. In step S121, the processor 207 can compare the remaining battery amount with the threshold corresponding to the current remaining battery amount among the plurality of thresholds. This applies to a case where the capsule remaining amount or the cartridge remaining amount is displayed in a bar graph form.

The present invention is not limited to the foregoing embodiment, and various variations/changes are possible within the spirit of the present invention.

### REFERENCE SIGNS LIST

100: suction apparatus, 102: power supply unit, 104: atomizer (cartridge), 105: capsule holder, 106: capsule

## Claims

1. A power supply unit of an aerosol generation apparatus, that supplies electric power to an atomizer including a heater configured to heat an aerosol source, **characterized by** comprising:
a power supply;
a power supplier configured to supply electric power from the power supply to the heater;
a first notification unit;
a second notification unit separated from the first notification unit; and
a controller configured to control the electric power supply by the power supplier and notifications by the first notification unit and the second notification unit,
wherein the controller
acquires a remaining amount of an element consumed to generate flavored aerosol,
makes a notification of the remaining amount of the element by the first notification unit in a case where a remaining amount of the power supply is not smaller than a first threshold, and
makes a notification of the remaining amount of the element by the second notification unit in a case where the remaining amount of the power supply is smaller than the first threshold.

2. The power supply unit according to claim 1, **characterized in that** a power consumption of the first notification unit is larger than a power consumption of the second notification unit.

3. The power supply unit according to claim 1 or 2, **characterized in that** the controller
executes the electric power supply by stopping the notification by the first notification unit, and
executes the electric power supply while continuing the notification by the second notification unit.

4. The power supply unit according to claim 3, **characterized in that** the controller continues the notification by the second notification unit even after the electric power supply is stopped.

5. The power supply unit according to claim 3 or 4, **characterized in that**
the controller is operable in a sleep mode in which a power consumption of the controller is smaller than in an active mode in which the electric power supply is executable, and
the controller continues the notification by the second notification unit in the sleep mode.

6. The power supply unit according to claim 5, **characterized in that** the second notification unit can continue the notification in the sleep mode without consuming the electric power.

7. The power supply unit according to claim 3, **characterized in that** the controller continues the notification by the second notification unit until the remaining amount of the element is recovered.

8. The power supply unit according to any one of claims 1 to 7, **characterized by** further comprising a third notification unit separated from the first notification unit and the second notification unit,
wherein the controller makes a notification of the remaining amount of the element by the third notification unit in a case where the remaining amount of the power supply is smaller than a second threshold smaller than the first threshold.

9. The power supply unit according to claim 8, **characterized in that** a power consumption of the first notification unit and a power consumption of the third notification unit are larger than a power consumption of the second notification unit.

10. The power supply unit according to claim 9, **characterized in that** the power consumption of the first notification unit is larger than the power consumption of the third notification unit.

11. The power supply unit according to any one of claims 8 to 10, **characterized in that** in a case where the remaining amount of the power supply is smaller than the second threshold, the controller makes a notification of the remaining amount of the element by the second notification unit and the third notification unit.

12. A power supply unit of an aerosol generation apparatus, that supplies electric power to an atomizer including a heater configured to heat an aerosol source, **characterized by** comprising:
a power supply;
a power supplier configured to supply electric power from the power supply to the heater;
a display configured to consume the electric power only to rewrite contents to be displayed; and
a controller configured to control the electric power supply by the power supplier and display on the display,
wherein the controller
acquires a remaining amount of an element consumed to generate flavored aerosol, and
displays the remaining amount of the element on the display only in a case where a remaining amount of the power supply is smaller than a first threshold.
